# EUROPEAN PATENT APPLICATION

(11) **EP 1 947 783 A1**
(43) Date of publication of application: **23.07.2008**
(21) Application number: 06811488.3
(22) Date of filing: 10.10.2006
(51) Int. Cl.: H04B 7/26, H04Q 7/38

(54) **RADIO COMMUNICATION METHOD, RADIO COMMUNICATION SYSTEM, BASE STATION, AND MOBILE STATION**

(30) Priority: 17.10.2005 JP 2005301697
(71) Applicant: NEC Corporation, Minato-ku Tokyo 108-8001 (JP)
(72) Inventor: KURODA, Nahoko, Minato-ku, Tokyo, 108-8001 (JP)
(74) Representative: Vossius & Partner
(86) International application number: PCT/JP2006/320175
(87) International publication number: WO 2007/046261

(57) **Abstract**

A radio communication method is provided for reducing the overhead of radio resources (transmission power, transmission time, frequency band) caused by the transmission of a control signal to a mobile station in a poor propagation environment and thus enabling an improvement of throughput of the entire system. A base station (101) and mobile stations (111 and 112) are connected to allow communication by way of radio links in which a control channel and data channel can be set on each of downlinks and uplinks. The base station (101) uses the control channel to transmit a control signal to the mobile stations (111 and 112). The mobile stations (111 and 112), based on the control signal received from the base station (101), use a data channel to transmit or receive data. The base station (101) alters the amount of information of the control signal in accordance with communication conditions of the propagation paths of the radio links formed with the mobile stations (111 and 112).

## Description

### Technical Field

The present invention relates to a radio communication method for performing high-speed packet transmission. The present invention further relates to a radio communication system, base station and mobile station that adopt a radio communication method of this type.

### Background Art

In a radio communication system, propagation loss of a radio signal increases with increasing distance between a base station and mobile station. Thus, in a mobile station located in the vicinity of a cell boundary, the ratio of the desired signal power to interference signal power (SIR) deteriorates dramatically compared to that of a mobile station located in the center of a cell due to both the decrease in the desired signal power and the increase in interference power resulting from the decreasing distance from adjacent base stations. Deterioration in SIR tends to bring about the occurrence of bit determination errors and in some cases prevents communication due to the increase in the data block reception error rate.

In a communication system that adopts CDMA (Code Division Multiple Access) or in particular WCDMA (Wideband CDMA), the spreading rate is set high to obtain large spreading gain, whereby the bit determination error can be reduced even in a mobile station in the vicinity of a cell boundary in which reception SIR is reduced. Even in a radio access mode other than CDMA, the data block reception error rate resulting from SIR deterioration can be suppressed by using strong coding to correct bit determination errors.

However, the use of a large spreading rate or strong encoding means that more radio symbols are transmitted with respect to the same number of information bits. The use of a large spreading rate or strong encoding therefore results in a decrease in the number of information bits that can be transmitted in a unit transmission time in a unit frequency bandwidth and brings about a reduction of the information transmission rate.

As a result, HSDPA or EUDCH, which are high-speed packet transmission methods in 3GPP, employ control for adaptively varying the information transmission rate by unit radio resources, i.e., the data-block size, in accordance with the propagation state (AMC: Adaptive Modulation and Coding). According to AMC, throughput for the entire system can be improved by using a low spreading rate or high coding rate to transmit at a high transmission rate to mobile stations having good propagation path conditions and using a high spreading rate or low coding rate to transmit at a low transmission rate to mobile stations having poor propagation path conditions. HSDPA is described in TR25.858 v5.0.0 (2002-03) "3^{rd} Generation Partnership Project; Technical Specification Group Radio Access Network; High-Speed Downlink Packet Access: Physical Layer Aspects (Release 5)" (hereinbelow referred to as "Non-Patent Document 1"). EUDCH is described in TR25.896 v6.0.0 (2004-03) "3^{rd} Generation Partnership Project; Technical Specification Group Radio Access Network; Feasibility Study for Enhanced Uplink for UTRA FDD (Release 6)" (hereinbelow referred to as "Non-Patent Document 2").

In a typical radio communication system, distinct from data channels for transmitting information bits, a control channel is used for transmitting control signals necessary for the transmission and reception of the data channel. For example, in EUDCH, a base station schedules the transmission rate or transmission timing of each mobile station and reports this information on a downlink control channel. Alternatively, in packet transmission on a downlink in EUTRA (Evolved UTRA) that is currently being studied by 3GPP, a debate is being advanced based on OFDMA (Orthogonal Frequency Division Multiple Access) for transmitting by bundling a plurality of orthogonal narrow-band carriers, but a case is being investigated for implementing scheduling based on the propagation states of carriers in each mobile station in which a base station transmits pilot signals on all bandwidths, and each mobile station measures the reception quality for each carrier or each unit carrier set (chunk) and reports the results on an uplink control channel. These control signals necessitate the transmission of a bit sequence that accords with a prescribed format and therefore necessitate the transmission of a prescribed number of bits for one data block transmission regardless of the propagation path conditions, i.e., prescribed transmission rate. EUTRA is described in "Principles for the Evolved UTRA radio-access concept," Alcatel, Ericsson, Fujitsu, LGE, Motorola, NEC, Nokia, NTT DoCoMo, Panasonic, RITT, Samsung, Siemens, RAN WG1 Ad Hoc on LTE UTRA R1-050622 3GPP" (hereinbelow referred to as Non-Patent Document 3").

In addition to the cases described above, JP-A-2003-199173 (hereinbelow referred to as "Patent Document 1 ") discloses a construction that can control the start and stop of transmission of quality information during uplink quality control channel setting in a mobile station. By means of this construction, quality information can be transmitted from a mobile station to a base station only when necessary.

### Disclosure of the Invention

However, the following three controls are necessary for maintaining the above-described control signals at a desired reception quality regardless of the propagation path conditions:
(1) Using high transmission power to improve SIR in the transmission and reception of control signals to a mobile station in which the propagation path environment has deteriorated.
(2) Using a high spreading rate or strong coding to increase the transmission time for transmitting control signals in the transmission and reception of control signals to a mobile station in which the propagation path environment has deteriorated.
(3) Using a high spreading rate or strong coding to increase the frequency bandwidth for transmitting control signals in the transmission and reception of control signals to a mobile station in which the propagation path environment has deteriorated.

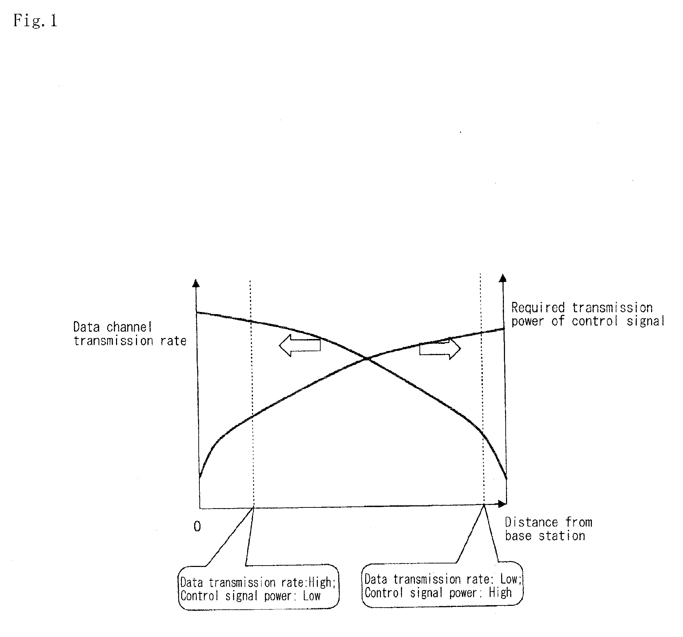

FIG. 1 shows the relations among transmission rate, distance from the base station, and transmission power. In FIG. 1, one vertical axis is the transmission rate of the data channel, the other vertical axis is the necessary transmission power of the control signal, and the horizontal axis shows distance from the base station. As can be understood from FIG. 1, the transmission and reception of a control signal to and from a mobile station in which the propagation path environment has deteriorated requires greater radio resources (transmission power, transmission time, frequency bandwidth) than a mobile station in which the propagation path environment is good. In addition, if adaptive control of the transmission rate of the data channel according to the propagation environment is considered, a very large amount of radio resources is used to transmit control signals in order to obtain a low throughput.

The above-described condition gives rise to the following problems:

The system throughput falls due both to the increase in the transmission power/transmission time/frequency bandwidth required for a base station to transmit a control channel and the decrease of the transmission power/transmission time/frequency bandwidth the base station can use for the data channel.

In addition, the user throughput falls due both to increase in the transmission power/transmission time/frequency bandwidth required for the mobile station to transmit the control channel and decrease in the transmission power/transmission time/frequency bandwidth the mobile station can use for the data channel.

Further, the continuous battery life of the mobile station is shortened by the increase in the power consumption required for the mobile station to transmit a unit data size.

Still further, when the transmission power/transmission time/frequency bandwidth of a mobile station at a cell boundary increases, this need to increase the interference power upon adjacent cells causes the system throughput in adjacent cells to fall.

It is an exemplary object of the present invention to provide a radio communication method, a radio communication system, a base station and a mobile station that can solve the above-described problems and improve the throughput of the entire system without necessitating a great amount of radio resources (transmission power, transmission time, frequency bandwidth) in the transmission and reception of control signals to mobile stations in which the propagation path environment is poor compared to mobile stations in which the propagation path environment is good.

It is another exemplary object of the present invention to provide a radio communication method, radio communication system, base station, and mobile station that can reduce the power consumption of a mobile station.

To achieve the above-described objects, the first exemplary aspect of the present invention includes is characterized by a construction in a radio communication system in which a base station and mobile stations are connected to allow communication by way of radio links wherein the base station uses a control channel that is set to a downlink of the radio links to transmit a control signal to the mobile stations; the mobile stations, based on the control signal received from the base station, use a data channel set to a downlink or an uplink of the radio links to receive or transmit data; and the amount of information of the control signal is altered according to the communication conditions of the propagation paths of the radio links formed between the base station and the mobile stations. In this case, the base station or mobile stations may determine the alteration of amount of information of the control signal.

The second exemplary aspect of the present invention is characterized by a construction in a radio communication system in which a base station and mobile stations are connected to allow communication by way of radio links wherein the mobile stations use a control channel set to an uplink of the radio links to transmit a control signal to the base station; the base station, based on the control signal received from the mobile stations, uses a data channel set to a downlink or uplink of the radio links to transmit or receive data; and the amount of information of the control signal is altered in accordance with the communication conditions of the propagation paths of the radio links formed between the base station and the mobile stations. In this case, the base station or the mobile stations may determine the alteration of the amount of information of the control signal.

The third exemplary aspect of the present invention is characterized by a construction in a radio communication system in which a base station and mobile stations are connected to allow communication by way of radio links wherein the base station uses a control channel set to a downlink of the radio links to transmit a common control signal to a plurality of the mobile stations that are connected by way of the radio links; each of the mobile stations, based on the common control signal received from the base station, uses a data channel set to a downlink or uplink of the radio links to receive or transmit data; and the number of mobile stations that are the objects of transmission of the common control signal is altered in accordance with the communication conditions of the propagation paths of the radio links formed between the base station and each of the mobile stations. In this case, the base station may determine the alternation of the number of mobile stations that are the transmission objects of the common control signal.

According to the invention described above, a base station can switch the amount of information of a control signal of a downlink or the number of mobile stations that share the control signal in accordance with the propagation path conditions of the mobile stations. As a result, the transmission power of the control signal on a downlink can be reduced to a mobile station that makes little contribution to the throughput of uplinks due to deterioration of a propagation path, and the amount of power that can be used for other downlinks can be increased. Accordingly, the throughput of downlinks can be increased. On the other hand, the amount of information of the control signal can be increased for a mobile station that makes a large contribution to throughput of uplinks due to a good propagation path, scheduling delays can be reduced through the implementation of precise scheduling control, and the throughput of uplinks can be further increased.

In addition, uplink radio resources that are used in a mobile station that uses a low coding rate due to deterioration of propagation path conditions can be decreased to the same degree as a mobile station in which the propagation path is good. Accordingly, the system throughput of all uplink/downlinks can be improved by reducing the uplink radio resources necessary for realizing low throughput and using this portion for other uplink data channel transmission.

Although the transmission of mobile stations located in the vicinity of cell boundaries produces interference waves for adjacent cells, the present invention allows a decrease of the proportion of uplinks by which mobile stations transmit control signals, whereby such effects can be expected as a decrease in interference upon adjacent cells and an improvement of uplink throughput in adjacent cells.

Due to the decrease of the proportion of radio resources used for control signals in an environment of poor propagation path conditions, the average transmission power of mobile stations decreases, and the average continuous battery life can be increased.

### Brief Description of the Drawings

FIG. 1 is a characteristics chart showing the relations among transmission rate, distance from the base station, and the transmission power;
FIG. 2 is a block diagram showing the configuration of a radio communication system that is the first exemplary embodiment of the present invention;
FIG. 3 is a figure for explaining the method of using E-AGCH and E-RGCH in a base station;
FIG. 4 is a block diagram showing the configuration of the base station shown in FIG. 2;
FIG. 5 is a flow chart showing the procedure for transmission of a scheduling signal carried out in the base station shown in FIG. 4;
FIG. 6 is a block diagram showing the configuration of the mobile station shown in FIG. 2;
FIG. 7 is a flow chart showing the processes relating to control of updating the assigned power offset and the determination of transmission rate that are carried out in the mobile station shown in FIG. 6;
FIG. 8 is a figure for explaining the method of transmitting common scheduling information that is carried out in the radio communication system that is the third exemplary embodiment of the present invention;
FIG. 9 is a flow chart showing the scheduling signal transmission procedure carried out in the base station of the radio communication system that is the third exemplary embodiment of the present invention;
FIG. 10A is an explanatory view of OFDMA of the radio communication system that is the fifth exemplary embodiment of the present invention;
FIG. 10B is a characteristics chart showing the propagation path quality of the radio communication system that is the fifth exemplary embodiment of the present invention;
FIG. 10C is a characteristics chart showing another example of the propagation path quality of the radio communication system that is the fifth exemplary embodiment of the present invention;
FIG. 11 is a figure for explaining the operation of a mobile station in the vicinity of a cell boundary in the radio communication system that is the fifth exemplary embodiment of the present invention; and
FIG. 12 is a flow chart for explaining the scheduling operation that is carried out in the base station of the radio communication system that is the fifth exemplary embodiment of the present invention.

### Explanation of Reference Numbers

- 101: base station
- 111, 112: mobile station
- 121: base station controller

### Best Mode for Carrying Out the Invention

The following detailed explanation regards embodiments of the present invention.

The first exemplary aspect of present invention is characterized by a construction in a radio communication system that includes a base station and mobile stations that are connected to allow communication with the base station by way of radio links in which a control channel and data channel can be set in each of uplinks and downlinks wherein: the base station uses a control channel to transmit a control signal to the mobile stations; the mobile stations, based on the control signal received from the base station, use a data channel to transmit or receive data; and the amount of information of the control signal is altered in accordance with the communication conditions of the propagation paths of radio links formed between the base station and mobile stations. The alteration of the amount of information of the control signal is carried out by the base station or the mobile stations or by a base station controller that is connected to the base station.

The second exemplary aspect of the present invention is characterized by a construction in a radio communication system that includes a base station and mobile stations that are connected to allow communication with the base station by way of radio links in which a control channel and a data channel can be set in each of uplinks and downlinks wherein: the mobile stations use a control channel to transmit a control signal to the base station; the base station, based on the control signal received from the mobile stations, uses a data channel to transmit or receive data; and the amount of information of the control signal is altered in accordance with the communication conditions of the propagation paths of the radio links formed between the base station and mobile stations. The alteration of the amount of information of the control signals is carried out by the base station or the mobile stations, or by a base station controller connected to the base station.

The third exemplary aspect of the present invention is characterized by a construction in a radio communication system that includes a base station and mobile stations connected to allow communication with the base station by way of radio links in which a control channel and a data channel can be set in each of uplinks and downlinks wherein: the base station uses a control channel to transmit a common control signal to a plurality of mobile station connected by way of radio links; each of the mobile stations, based on the common control signal received from the base station, uses a data channel to transmit or receive data; and the number of mobile stations that are the transmission objects of the common control signal is altered in accordance with the communication conditions of propagation paths of radio links formed between the base station and each of the mobile stations. The alteration of the number of mobile stations is carried out by the base station or by a base station controller connected to the base station.

Embodiments relating to the first to third exemplary aspects are next described with reference to the accompanying figures.

### First Exemplary Embodiment

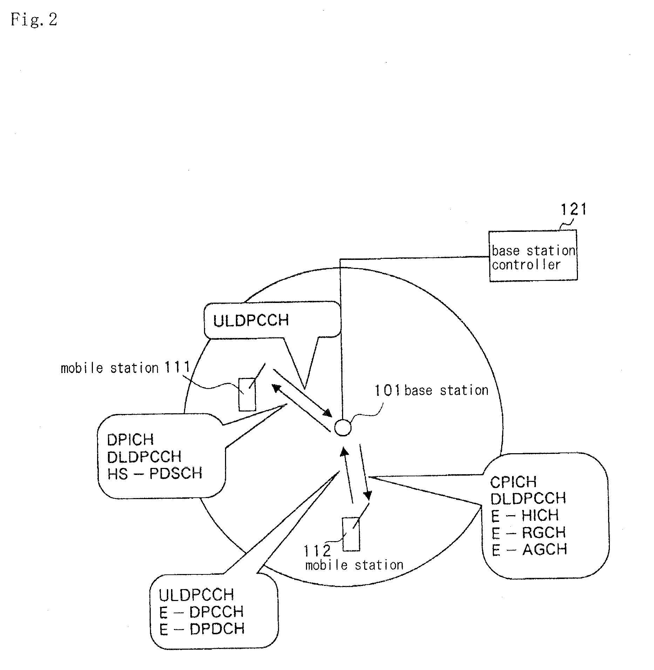

FIG. 2 shows the radio communication system that is the first exemplary embodiment of the present invention. The example here described is EUDCH (Enhanced Uplink Dedicated Channel), which is a method of high-speed packet transmission on a 3GPP uplink.

Referring to FIG. 2, the radio communication system is a system that employs the (UL (uplink) data transmission/DL (downlink) control channel/pilot determination/base station determination/bit number alteration) construction of the first embodiment and is made from: base station 101, a plurality of mobile stations 111 and 112, and base station controller 121 to which base station 101 is connected. Base station 101 transmits a pilot channel (CPICH: Common Pilot Indicator Channel), which is a known signal, to all mobile stations in the cell at a fixed power.

Base station 101 and mobile station 111 set individual control channels (DPCCH: Dedicated Physical Control Channels) on uplinks and downlinks, and set an HS-PDSCH (High-Speed Physical Data Shared Channel) on a downlink to carry out high-speed packet transmission. Pilot signals and TPC (Transmission Power Control) signals are contained in both uplink and downlink DPCCH, and the mobile stations and base stations implement high-speed closed-loop transmission power control by measuring the reception quality of each pilot signal and then transmitting a TPC signal indicating the increase or decrease of power to approach a prescribed target SIR. In addition, the HS-PDSCH is transmitted to transmit by the highest possible transmission rate using the power that remains after first securing the power necessary for other channels from the maximum transmission power of the base station.

In addition to the individual channels of uplinks/downlinks, base station 101 and mobile station 112 set E-HICH (Enhanced-HARQ Indicator Channel), E-RGCH (Enhanced-Relative Grant Channel), and E-AGCH (Enhanced-Absolute Grant Channel) on downlinks and E-DPDCH (Enhanced-Dedicated Physical Data Channel) and E-DPCCH (Enhanced-Dedicated Physical Control Channel) on uplinks and carry out high-speed packet transmission on uplinks. Mobile station 112 both transmits data blocks by E-DPDCH and reports control signals necessary for data reception and control signals necessary for scheduling (i.e., residual amount of transmission power, amount of data in buffer) on E-DPCCH. Base station 101 performs a process of receiving data blocks that are transmitted on E-DPDGH based on a control signal contained in E-DPCCH, determines the existence of errors from appended CRC, and reports the determination results to mobile station 112 as ACK (correctly received) or NACK (error reception) by E-HICH.

In addition, base station 101 measures the total reception power at a prescribed period and performs scheduling of mobile stations to keep below a target reception power value. Various scheduling methods can be used such as a Round-Robin method in which information relating to the data amount in the buffers of the mobile stations is used to create a transmission queue and transmission opportunities are conferred in order, or a scheduling method in which transmission opportunities are conferred by preferentially selecting from mobile stations that can realize the highest transmission transfer rate at the lowest transmission power based on the information of the remaining transmission power (residual power information) of the mobile stations and the current transmission transfer rate. Here, base station 101 is assumed to use the Round-Robin method to perform scheduling.

In CDMA, the higher the transmission rate, the higher the required reception power that is demanded. In addition, there is a limit in base station 101 on the maximum reception power that can maintain suitable communication. Accordingly, the scheduler in base station 101 must determine the transmission rate of E-DPDCH of each mobile station such that the total reception power does not exceed the maximum reception power value, and moreover, such that the highest possible transmission rate is assigned to necessary mobile stations.

In addition, the scheduler in base station 101, upon determining the transmission rate assigned to each mobile station, reports the required power of the determined transmission rate as the power permitted for use in mobile stations by E-AGCH or E-RGCH of the downlinks. At this time, the power permitted for use is reported as the offset power for DPCCH. Mobile station 112 receives E-AGCH or E-RGCH, detects the offset power value that has been permitted for use, selects the transmission rate that can be transmitted from the relation between the transmission rate and the required power, and transmits E-DPDCH.

Here, E-AGCH is a 5-bit control signal showing the absolute value of the power offset. E-RGCH is a control signal instructing the increase or decrease of the currently assigned power offset in prescribed power steps, and in this case is assumed to be a 1-bit control signal for increase or decrease by 1dB. Because these control signals are transmitted at the same unit transmission times (TTI: Transmission Time Intervals), the information transmission rate is higher for E-AGCH than E-RGCH. Accordingly, the required power for transmitting to the same mobile station at the same error rate is higher for E-AGCH than for E-RGCH. However, E-AGCH communicates an absolute value and can therefore alter to the desired power offset value by the transmission of one TTI control signal. In contrast, E-RGCH is a differential control signal and therefore may require transmission of a plurality of TTI control signals for altering to the desired power offset value, and E-RGCH therefore involves greater control delays. In the present embodiment, base station 101 takes advantage of this trade-off relation to improve the system throughput of all uplinks/downlinks.

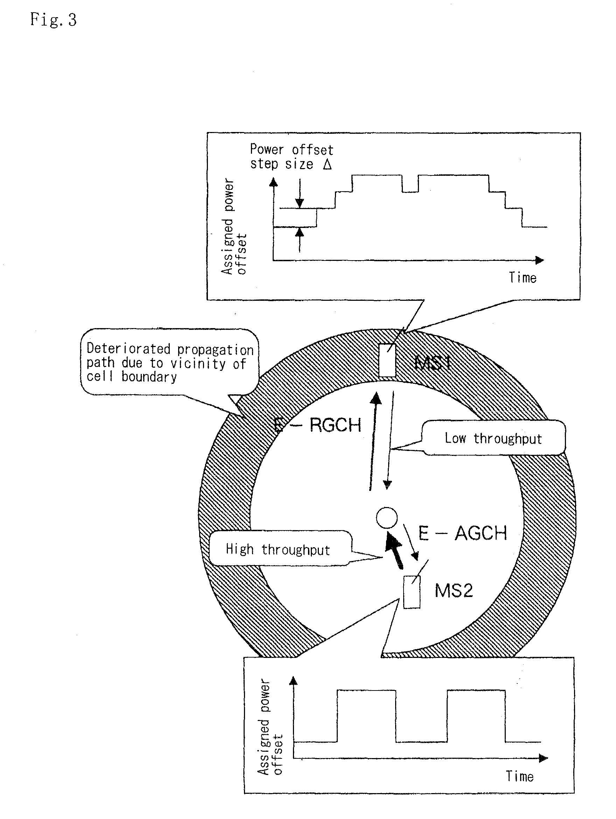

FIG. 3 is a view for explaining the method of using E-AGCH and E-RGCH in the base station. As shown in FIG. 3, in the base station in this embodiment, the use of E-AGCH and E-RGCH is switched in accordance with the propagation path conditions of mobile stations. More specifically, each of mobile stations MS1 and MS2 reports the reception quality of CPICH at a prescribed period, and in the base station, E-AGCH is used for mobile station MS2 that has good reception quality and E-RGCH is used for mobile station MS1 that has poor reception quality. In this way, the transmission power of the control signal on a downlink is reduced for mobile station MS1 that makes little contribution to the throughput of uplinks due to a poor propagation path, whereby the amount of power that can be used for the other downlinks is increased, and as a result, the throughput of downlinks can be increased.

For mobile station MS2 that makes a large contribution to uplink throughput due to an excellent propagation path, on the other hand, E-AGCH is used to reduce scheduling delays and thus enable an increase in the throughput of uplinks. Even though mobile station MS2 uses E-AGCH, the power required is low because the propagation path is good, and the proportion of the transmission power resources occupied in downlinks is small. Accordingly, the effect of reducing throughput of the downlinks is extremely small.

As described in the foregoing explanation, distinguishing the use of E-AGCH and E-RGCH according to the propagation path conditions of mobile stations enables an increase in the throughput of the entire system that includes both uplinks/downlinks.

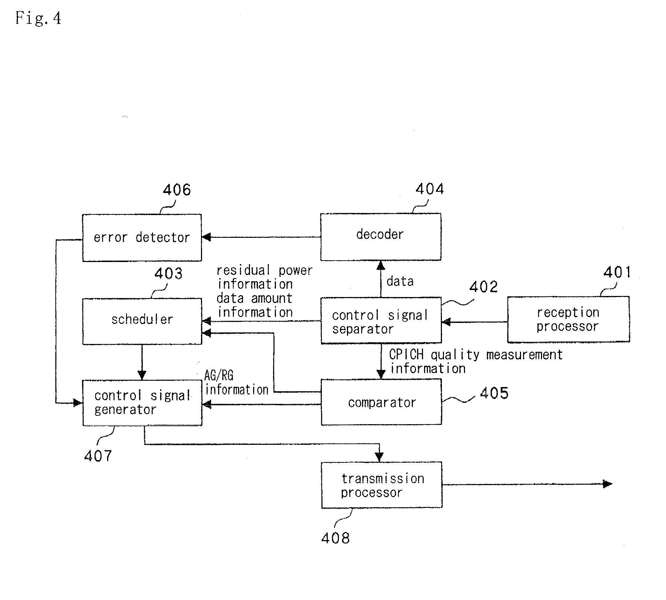

FIG. 4 shows the configuration of a base station of the radio communication system of the present embodiment. Referring to FIG. 4, the base station is made up from reception processor 401, control signal separator 402, scheduler 403, decoder 404, comparator 405, error detector 406, control signal generator 407, and transmission processor 408.

Reception processor 401 receives E-DPDCH, E-DPCCH, and DPCCH, carries out despreading, and sends the result to control signal separator 402. Control signal separator 402 separates user data and control signals and sends user data contained in E-DPDCH to decoder 404, sends CPICH reception measurement information to comparator 405, and sends residual power information and information of the amount of data in buffers to scheduler 403. Decoder 404 carries out a decoding process of the user data. Error detector 406 detects errors from CRC and carries out a determination of errors.

Comparator 405 compares the CPICH reception measurement information reported by each mobile station with a prescribed quality threshold value, and notifies scheduler 403 and control signal generator 407 that E-AGCH is to be used if the CPICH reception quality of a mobile station is higher than the threshold value and that E-RGCH is to be used if the CPICH reception quality is lower than the threshold value. Scheduler 403 performs scheduling based on the residual power information and information on the amount of data in buffers transmitted by each user and the total reception power of the base station and determines the increase or decrease of the power offset or the power offset value to be assigned to each mobile station. This result of determination is sent to control signal generator 407.

Control signal generator 407 generates ACK/NACK signals based on the results of error determination from error detector 406. Control signal generator 407 further generates scheduling signals that use either of the E-AGCH or E-RGCH format based on the notification from comparator 405 (notification regarding which of E-AGCH and E-RGCH to use) and the scheduling results from scheduler 403 (the increase or decrease of the power offset or power offset value). The scheduling signals, ACK/NACK signals, and user data sent from the higher-rank layer undergo processing such as rate-matching, interleaving, code-multiplexing, and spreading in transmission processor 408 and are then transmitted.

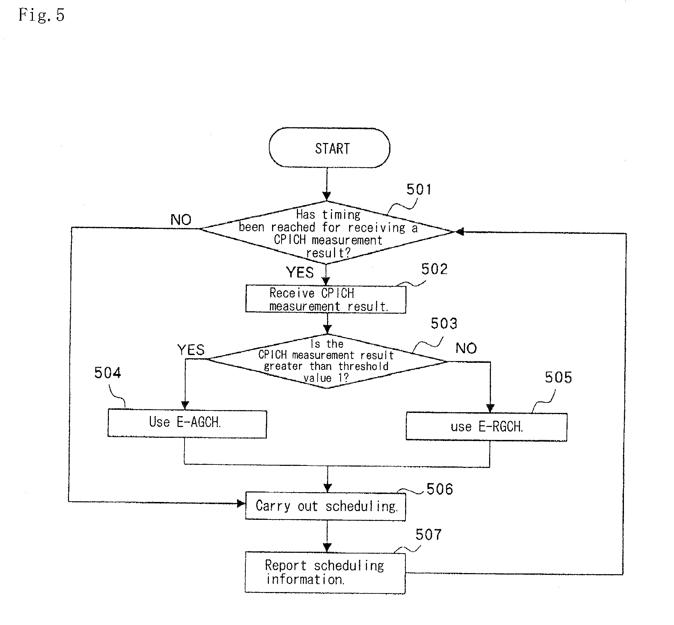

FIG. 5 shows the flow of the procedure for the transmission of scheduling signals of the base station shown in FIG. 4. In the base station, at the timing of reception of CPICH measurement result transmitted by a mobile station at a prescribed period (Step 501), reception processor 401 first receives the CPICH measurement result (Step 502). Comparator 405 then compares the CPICH measurement result received in reception processor 401 with prescribed CPICH quality threshold value 1 (Step 503). If the CPICH measurement result received in reception processor 401 surpasses threshold value 1, comparator 405 determines the use of E-AGCH for the mobile station that is the transmission source of the CPICH measurement result (Step 504). When the CPICH measurement result received at reception processor 401 is equal to or less than threshold value 1, comparator 405 determines the use of E-RGCH for the mobile station that is the transmission source of the CPICH measurement result (Step 505).

After the determination of Step 504 or Step 505 has been carried out, scheduler 403 performs scheduling of the mobile station that is the transmission source. After scheduling, control signal generator 407 generates a scheduling signal and transmits the signal by way of transmission processor 408 to the mobile station (Step 507). In this Step 507, control signal generator 407 generates a scheduling signal that indicates the absolute value of the power offset in the E-AGCH format when the use of E-AGCH has been determined in Step 504 and generates a scheduling signal that indicates the increase or decrease of the assigned power offset in E-RGCH format when the use of E-RGCH has been determined in Step 505.

When it is not the timing of reception of a prescribed CPICH measurement result in Step 501, the channel used in the previous TTI is used (E-AGCH or E-RGCH).

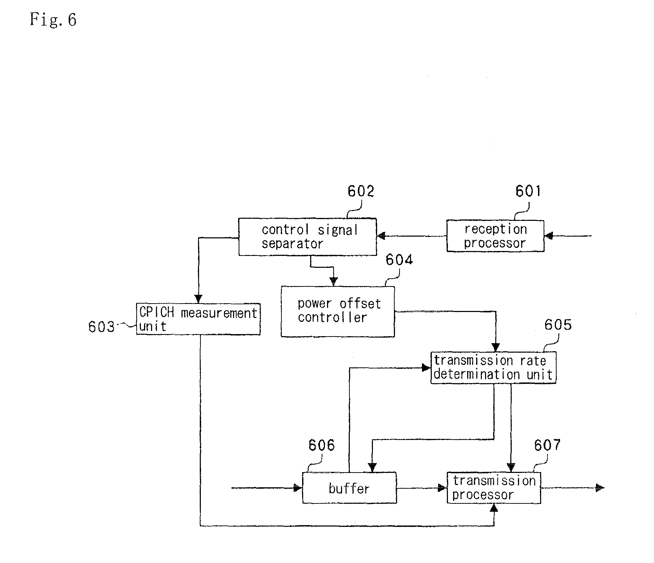

FIG. 6 shows the configuration of a mobile station of the radio communication system of the present embodiment. Referring to FIG. 6, the mobile station is made up from: reception processor 601, control signal separator 602, CPICH quality measurement unit 603, power offset controller 604, transmission rate determination unit 605, buffer 606, and transmission processor 607.

Reception processor 601 receives E-HICH, E-AGCH, E-RGCH, and DPCCH, carries out despreading, and sends the result to control signal separator 602. Control signal separator 602 separates each of the control signals, sends CPICH to CPICH quality measurement unit 603, sends ACK/NACK information contained in E-NICH to buffer 606, and sends scheduling information contained in E-AGCH or E-RGCH to power offset controller 604. CPICH quality measurement unit 603 measures the average reception power of CPICH during a prescribed measurement time interval and generates CPICH quality information at a prescribed timing to send to transmission processor 607.

The scheduling information separated in control signal separator 602 is used in the power offset control of E-DPDCH. Power offset controller 604 calculates the power offset that can be used in E-DPDCH based on the scheduling information supplied from control signal separator 602 and reports this power offset to transmission rate determination unit 605. Transmission rate determination unit 605 determines the transmission rate of E-DPDCH based on the current DPCCH power and the power offset information of E-DPDCH supplied from power offset controller 604. The determined transmission rate is reported to buffer 606.

Buffer 606 passes the relevant data block data that were being held to transmission processor 607 when a NACK signal is supplied from control signal separator 602 (resends data block data) and discards the relevant data blocks that were being held when an ACK signal is supplied from control signal separator 602. Buffer 606 further sends to transmission processor 607 data that are to be transmitted in the next TTI in accordance with the transmission rate determined in transmission rate determination unit 605.

After subjecting the user data and control signals that have been sent in to necessary transmission processes such as rate matching and interleaving, transmission processor 607 carries out code-multiplexing and spreading for transmission.

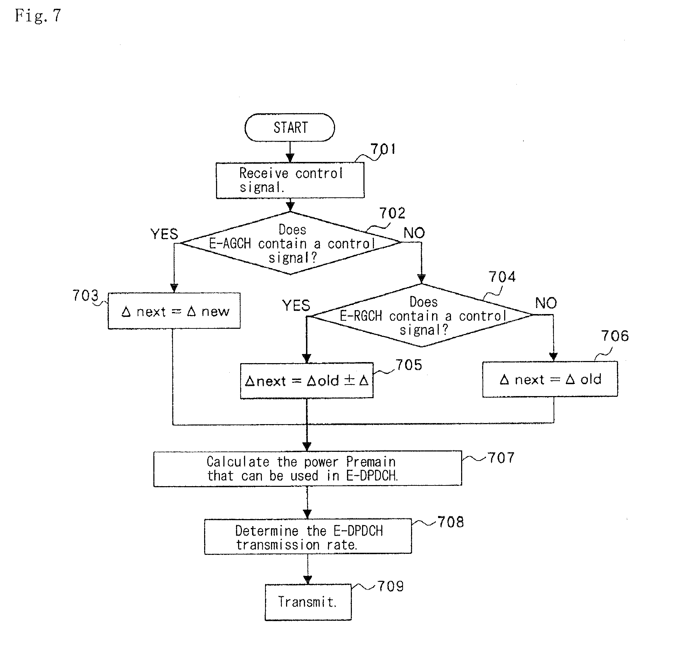

FIG. 7 shows the flow of operations of the mobile station shown in FIG. 6 relating to the update control of E-DPDCH assigned power offset and the E-DPDCH transmission rate determination that are carried out for each TTI. In the example shown in FIG, 7, "Δold" is E-DPDCH power offset (dB) used in the current TTI, "Δnext" is the E-DPDCH power offset (dB) that can be used in the next TTI, "Δnew" is the E-DPDCH power offset (dB) notified by E-AGCH, "Δ" is the prescribed power offset step size (dB), "Pmax" is the maximum transmission power (mW) of a mobile station, "Pcch" is the DPCCH transmission power (mW), "Pedch" is the E-DPDCH transmission power (mW), and "Pecch" is the E-DPDCH transmission power (mW).

In a mobile station, control signals are received each TTI in reception processor 601 (Step 701), and power offset controller 604 determines from the CRC detection results contained in E-AGCH whether control signals have been received by E-AGCH by way of control signal separator 602 (Step 702).

When a control signal has been received by E-AGCH ("Yes" in Step 702), power offset controller 604 sets "Δnext = Δnew" (Step 703). When a control signal is not received by E-AGCH ("No" in Step 702), power offset controller 604 determines from the E-RGCH reception power whether a control signal was received by E-RGCH by way of control signal separator 602 (Step 704).

When a control signal is received by E-RGCH ("Yes" in Step 704), power offset controller 604 sets "Δnext = Δold ± Δ" in accordance with the control signal (UP or DOWN) that was received (Step 705). If a control signal was not received by E-RGCH ("No" in Step 704), power offset controller 604 sets "Δnext = Δold" (Step 706).

After execution of any of Steps 703, 705, and 706, power offset controller 604 calculates the power (Premain = Pmax - Pcch - Pecch (mW)) that can be used in E-DPDCH in the next TTI (Step 707). Transmission rate determination unit 605 then determines the maximum transmission rate that can be transmitted in "min(Premain, Pcch * (10^(Δnext/10)))" in the next TTI as the transmission speed (Step 708), and transmission processor 607 carries out transmission at this transmission rate that has been determined (Step 709).

In the explanation of the operations shown in the above-described FIG. 5 and FIG. 7, the prescribed threshold value 1 may be varied in accordance with the amount of traffic on downlinks or the power required in other downlinks. In other words, the control signal generator, upon determining that overhead resulting from E-AGCH presents no problems because the amount of traffic of downlinks is small and the power required on other downlinks is low, sets threshold value 1 low to allow the use of E-AGCH even in mobile stations having poorer propagation path quality. In this way, the scheduling efficiency of uplinks can be raised without affecting the system throughput of downlinks, whereby the throughput of uplinks can be increased.

In addition, although mobile stations measure common pilot signal reception quality and notify the base station in order to estimate the downlink propagation path, the scope of the present invention is not limited to this form. For example, as will be described in the third exemplary embodiment hereinbelow, the base station may estimate the error reception rate of E-AGCH of each mobile station and determine that the propagation path quality is poor when the proportion of error reception surpasses a threshold value. In this case, the base station can determine that an E-AGCH error reception has occurred in a mobile station when the mobile station uses a power offset that is greater than the power offset that was assigned to the mobile station and can estimate the E-AGCH error reception rate from the number of instances of error reception in a prescribed time interval.

In the present embodiment, the base station estimated downlink propagation paths and determined switching of the use of E-AGCH and E-RGCH, but the scope of the present invention is not limited by this form. For example, when the base station is connected to a base station controller that manages the radio resources of the base station, the base station may report information relating to the propagation conditions to the base station controller, and the base station controller may determine switching.

According to the embodiment described hereinabove, the base station can switch the use of E-AGCH and E-RGCH in accordance with the propagation path conditions of a mobile station. As a result, for a mobile station in which the contribution to uplink throughput is small due to a poor propagation path, the control signal power on downlinks is reduced and the amount of power that can be used for other downlinks is correspondingly increased, whereby the downlink throughput can be increased. On the other hand, for a mobile station in which the contribution to uplink throughput is great due to a good propagation path, E-AGCH is used to reduce scheduling delays and enable a further increase in uplink throughput. Despite the use of E-AGCH for such mobile stations, the power required for control signals is small because the propagation path is good, and the proportion of downlink transmission power resources is small. Accordingly, the effect of reducing downlink throughput is extremely small. The present embodiment therefore obtains the effect of enabling an increase of the system throughput for all uplinks/downlinks.

### Second Exemplary Embodiment

The radio communication system that is the second exemplary embodiment of the present invention employs the construction (UL data transmission/DL control channel/separate channel power determination/base station determination/bit number alteration) of the first embodiment. The radio communication system of the first exemplary embodiment is of a configuration in which a mobile stations measures common pilot signal reception quality and reports to the base station in order to estimate the downlink propagation paths. In contrast, the radio communication system of the present embodiment differs from the first exemplary embodiment in that, instead of this estimation of downlink propagation paths, the propagation paths of a mobile stations are estimated from the DPCCH transmission power for which closed-loop transmission power control is implemented to attain a prescribed reception quality.

The construction of the radio communication system of the present embodiment is next described. However, explanation is omitted regarding parts that are the same as the first exemplary embodiment, and explanation regards only parts that are distinguishing features, taking as an example EUDCH that is a method of high-speed packet transmission on uplinks in 3GPP.

The base station is fundamentally the same as the construction shown in FIG. 4, but the operation of the comparator differs. The comparator compares the control value of the transmission power of downlink DPCCH with a prescribed threshold value 1' at a prescribed timing. When the transmission power value surpasses threshold value 1', the comparator determines that the propagation path of the mobile station is poor and determines the use of E-RGCH. On the other hand, when the transmission power is equal to or less than threshold value 1', the comparator determines that the propagation path of the mobile station is good and determines the use of E-AGCH. The operations are otherwise the same as the base station in the first exemplary embodiment.

In the radio communication system of the present embodiment, the base station switches the use of E-AGCH and E-RGCH in accordance with the propagation path conditions of mobile stations, whereby the system throughput for all downlinks/uplinks can be increased.

### Third Exemplary Embodiment

The radio communication system that is the third exemplary embodiment of the present invention employs the construction (UL data transmission/DL control channel/pilot determination/base station determination/shared number alteration) of the third embodiment. The radio communication system of the first exemplary embodiment is of a configuration that uses E-RGCH in which the number of information bits is less than in E-AGCH to reduce the control signal transmission power of downlinks for a mobile station having poor propagation paths. In contrast, the radio communication system of the present embodiment differs from the first exemplary embodiment in that, instead of using E-RGCH to reduce the control signal transmission power of downlinks for a mobile station in which the propagation path is poor, common scheduling information is transmitted by E-AGCH to a plurality of mobile stations for which propagation path conditions are poor.

The following explanation regards the configuration of the radio communication system of the present embodiment. However, explanation is omitted regarding parts that are the same as in the first exemplary embodiment, and explanation regards only parts that are distinguishing features taking as an example EUDCH that is a 3GPP high-speed packet transmission method on uplinks.

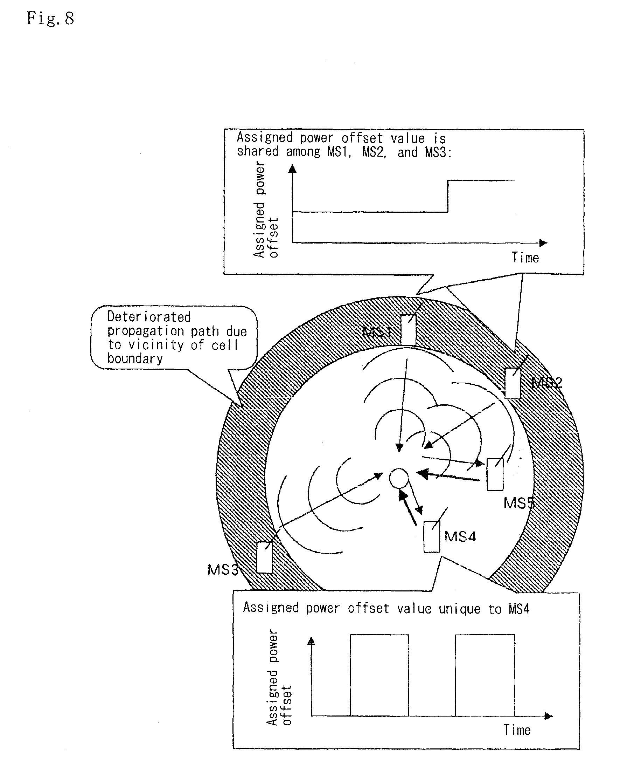

FIG. 8 is a view for explaining the method of transmitting common scheduling information by the base station. In the example shown in FIG. 8, of the plurality of mobile stations MS1-MS5, three mobile stations MS1-MS3 are located in the vicinity of cell boundaries, and the propagation paths of these mobile stations are in a poor state.

In the configuration shown in FIG. 4, in the base station in the present embodiment, comparator 405 both determines mobile stations MS1-MS3 for which propagation path conditions are poor through control signal separator 402 and sets these mobile stations MS1-MS3 that have been determined as one group. Scheduler 403 then transmits common scheduling information to this mobile station group through control signal generator 407 by E-AGCH. When transmitting common scheduling information to mobile stations MS1-MS3 for which propagation path conditions are poor, the total transmission power of E-AGCH can be reduced compared to case of transmitting E-AGCH to each of mobile station MS1-MS3.

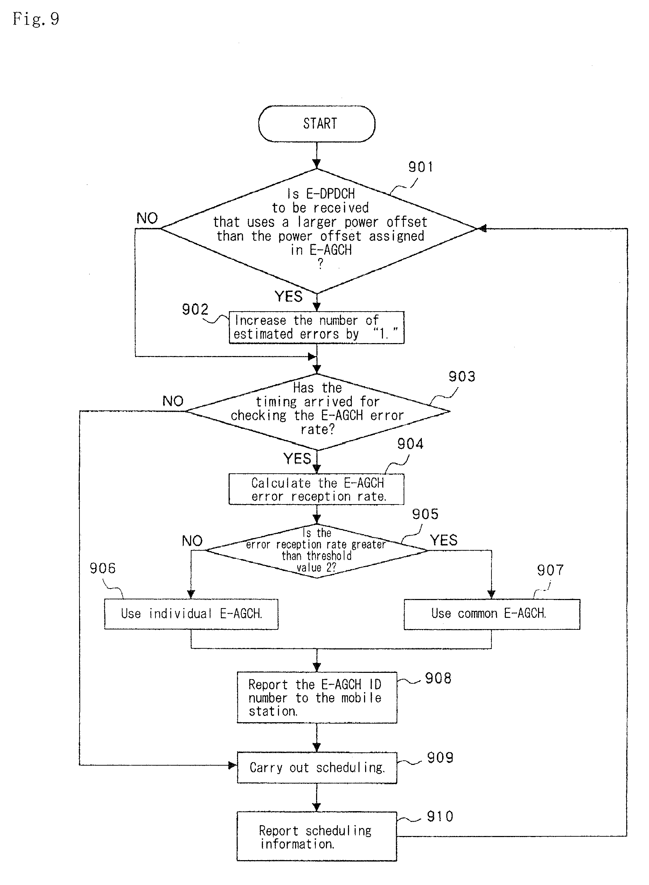

FIG. 9 shows the flow of the procedure of transmitting scheduling signals by the base station in the present embodiment. In the base station, comparator 405 first, based on the power information from control signal separator 402, determines whether a mobile station transmits E-DPDCH that uses greater power offset then the power offset assigned to the mobile station (Step 901). Comparator 405 holds a number of estimated errors, and upon receiving E-DPDCH, increases the held number of estimated errors by one (Step 902). The number of times E-AGCH has deteriorated in a mobile station and control signals relating to the assigned power offset have been received in error can be estimated from this number of estimated errors.

When E-DPDCH is not received ("No" in Step 901) or following the execution of Step 902, comparator 405 determines whether a prescribed E-AGCH error rate check timing has arrived or not (Step 903). When the E-AGCH error rate check timing arrives ("Yes" in Step 903), comparator 405 calculates the E-AGCH error rate from the number of estimated errors that is held (count number) (Step 904), and determines whether this calculated error rate has surpassed a prescribed threshold value 2 (Step 905).

When the E-AGCH error rate is no greater than the prescribed threshold value 2, comparator 405 determines the use of individual E-AGCH for the mobile station that is the link destination (Step 906). Comparator 405 manages the information of the mobile station group that uses common E-AGCH, and adds the information of the mobile station that is the link destination to the mobile station group that is managed (Step 907) when the E-AGCH error rate surpasses threshold value 2. The information of the mobile station group that uses common E-AGCH is stored in an information memory unit (not shown) and this information memory unit is used in the implementation of information management by comparator 405. The information of the mobile station group that uses common E-AGCH includes identification information (an ID number or address on a network) that can identify the mobile stations, and the mobile stations that are currently registered in the mobile station group can be determined based on this identification information.

Following the execution of Step 906 or Step 907, scheduler 403 reports the E-AGCH ID to the mobile station through transmission processor 408 (Step 908). The E-AGCH ID is information necessary for the process of receiving control signals that are transmitted by E-AGCH, an ID that is unique to the mobile station being reported to a mobile station that uses a separate E-AGCH and an ID that is common to the mobile station group being reported to mobile stations of a mobile station group that uses a common E-AGCH.

Following the execution of Step 908, scheduler 403 performs scheduling of mobile stations (Step 909). Control signal generator 407 then uses an individual E-AGCH or a common E-AGCH to transmit the absolute value of the assigned power offset (Step 910). At this time, control signal generator 407 uses common E-AGCH to report to a mobile station group that is using a common E-AGCH the average value of power offsets assigned to these mobile stations by scheduling.

When the prescribed E-AGCH error rate check timing has not been reached ("No" in Step 903), the E-AGCH (individual or common) that was used in the previous TTI is used.

As described hereinabove, according to the present embodiment, the base station can alter the group of mobile stations that is the object of control signals transmitted by E-AGCH in accordance with the propagation path conditions of the mobile stations. By using a common E-AGCH, the control signal power of downlinks is reduced to mobile stations for which the contribution to throughput of uplinks is small due to poor propagation paths. As a result, the amount of power that can be used for other downlinks can be increased, whereby the throughput of downlinks can be increased.

On the other hand, individual E-AGCH are used to reduce scheduling delays for mobile station for which the contribution to uplink throughput is great due to good propagation paths. As a result, the uplink throughput can be further increased. Despite the use of individual E-AGCH for such mobile stations, the power required for control signals is small due to the good propagation paths, and the proportion of occupation of transmission power resources of downlinks is therefore small. Accordingly, the effect of decreasing throughput of downlinks is extremely small.

As can be understood from the foregoing explanation, the present embodiment obtains the effect of enabling an increase in system throughput for all uplinks/downlinks.

Although a case was described in the present embodiment in which one group of mobile stations received common E-AGCH, a plurality of mobile station groups may also be established.

### Fourth Exemplary Embodiment

The radio communication system that is the fourth exemplary embodiment of the present invention employs the configuration (UL data transmission/UP control channel/pilot determination/mobile station determination/frequency alteration) of the second embodiment. The radio communication system of the first exemplary embodiment was of a configuration in which the control amount of control signals of downlinks transmitted by the base station was altered in accordance with the propagation path conditions of the mobile station. In contrast, the radio communication system of the present embodiment is of a configuration that differs from that of the first exemplary embodiment in that, instead of altering the control amount of control signals by the base station, the control amount of control signals of uplinks transmitted by a mobile station is altered in accordance with the propagation path conditions.

In a mobile station in the present embodiment, transmission processor 607 in the configuration shown in FIG. 6 reports scheduling information such as the data amount stored in buffer 606 and the residual power amount on the control channel of an uplink at prescribed period T1. In addition, CPICH measurement unit 603 measures the pilot signal of a downlink, and transmission processor 607 switches the transmission period of scheduling information to T2 (>T1) when the reception quality obtained from these measurement results does not exceed a prescribed threshold value.

A mobile station in which the propagation path is poor requires a higher amount of power than a mobile station in which the propagation path is good even at the same transmission rate, and cases consequently occur in which the limit of maximum power prevents a high-speed transmission rate. According to the present embodiment, such a mobile station in which the propagation path is poor can reduce the frequency of transmitting control signals and then use this portion of power resources as a data channel. Accordingly, the proportion for overhead can be decreased and the throughput of a mobile station for which the propagation path has deteriorated can be improved. In addition, because the overhead for throughput is reduced, the amount of power consumption per unit throughput can be reduced, and the battery continuation time of the mobile station can be improved.

In the present embodiment, moreover, although a mobile station measures the reception quality of a downlink pilot signal and compares the measurement result with a threshold value to independently alter the transmission period, the present invention is not limited to this form. A mobile station may report the reception quality of a pilot signal to the base station, and the base station or a base station controller connected to the base station may then determine switching of the transmission period at the mobile station based on the reception quality of the pilot signal that has been reported and instruct the mobile station.

In the present embodiment, a mobile station determined the propagation path conditions based on the reception quality of a downlink pilot signal that is measured, but the present invention is not limited to this form. For example, closed-loop power control may be carried out on the individual channel of a mobile station to achieve a prescribed quality at the base station, and the mobile station may therefore determine the propagation path conditions by comparing the transmission power of the individual channel with a prescribed threshold value. Alternatively, the residual power information of a mobile station is also reported to the base station by means of scheduling information, and the base station or the base station controller may therefore determine the propagation path conditions of the mobile station from the residual power information.

### Fifth Exemplary Embodiment

The radio communication system that is the fifth exemplary embodiment of the present invention employs the construction (DL data transmission/UL control channel/pilot determination/base station determination/bit number alteration) of the second embodiment, and OFDMA is used on downlinks and FDMA is used on uplinks. Explanation next regards the configuration of the radio communication system of the present embodiment taking downlink packet transmission method as an example.

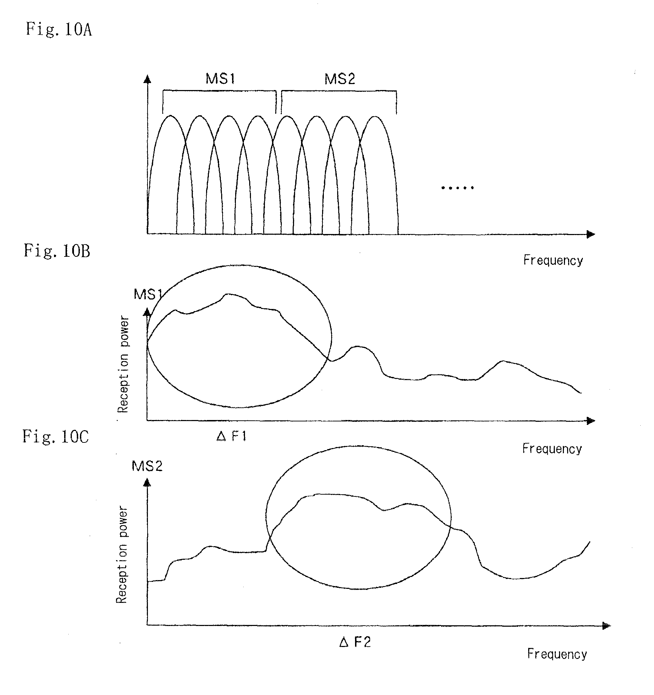

OFDMA is a mode of multiplexing a plurality of subcarriers having an orthogonal relation to each other on the frequency axis, as shown in FIG. 10A. Typically, when the entire bandwidth broadens, the influence of frequency-selective fading brings about differences in the propagation path quality of each subcarrier. For example, when the propagation path quality in frequency band ΔF1 is good in mobile station MS1 as shown in FIG. 10B and the propagation path quality in frequency band ΔF2 is good in mobile station MS2 as shown in FIG. 10C, data are transmitted to mobile station MS1 by the subcarrier located in ΔF1 and data are transmitted to mobile station MS2 by subcarrier located in ΔF2, whereby an improvement of throughput by the user multiplex effect can be expected.

Realizing user multiplexing on the frequency axis as described above requires propagation path quality information (CQI: Channel Quality Indicator) for each subcarrier at each mobile station. As a result, the base station in this embodiment transmits a pilot signal on all frequency bands at a prescribed period, and the mobile stations measure the average reception quality of the pilot signal of each chunk and calculate CQI for each chunk. Here, "chunk" means a subcarrier set of a prescribed number. In the present embodiment, three subcarriers are defined as one chunk. Mobile stations report the calculated CQI by an uplink control channel. The base station performs scheduling to maximize system throughput based on the CQI reported from each mobile station and transmits packets on downlinks.

In the radio communication system of the present embodiment, the number of frequency repetitions is "1" and the same frequency band is used by adjacent base stations, and mobile stations in the vicinity of cell boundaries therefore receive strong interference waves from adjacent base stations. In addition, the reception power of a desired wave tends to decrease due to propagation loss in the vicinity of cell boundaries, resulting in extreme deterioration of the reception SIR at a cell boundary, and this serves as a cause for increase in the reception error rate. To solve these problems in the present embodiment, the coding rate is set lower to implement strong coding in a mobile station located in the vicinity of a cell boundary, whereby the desired error rate is maintained even at a low SIR.

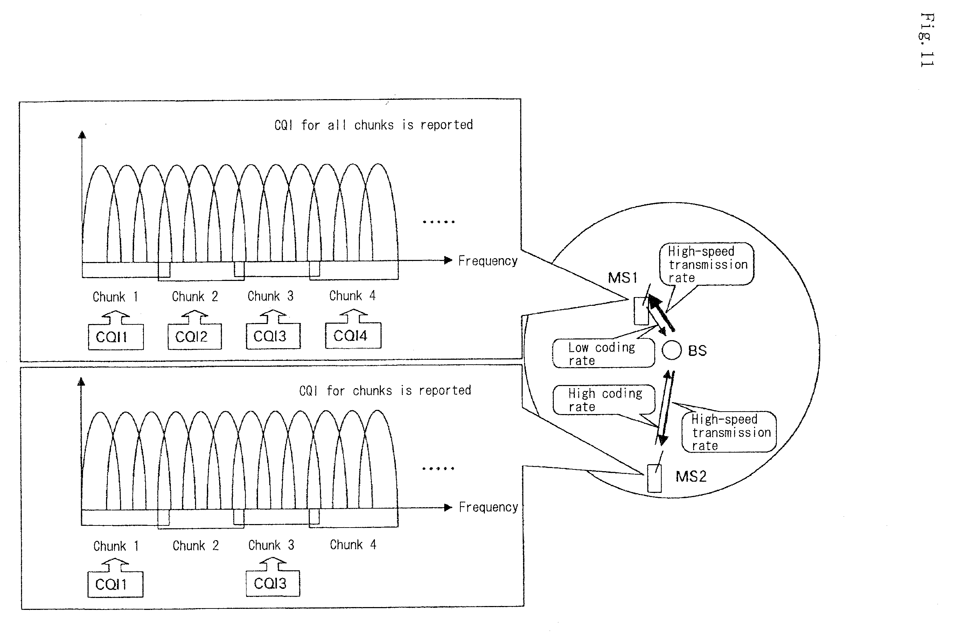

Alternatively, if a mobile station in a cell center carries out encoding at a 2/3 rate and a mobile station in the vicinity of a cell boundary carries out encoding at a 1/3 rate, the mobile station in the vicinity of a cell boundary requires twice the radio resources as the mobile station at the cell center to send the same number of information bits in 1 TTI. In the present embodiment, a mobile station in the vicinity of a cell boundary therefore transmits only CQI for odd-numbered chunks, as shown in FIG. 11. In this way, even a mobile station that is located in the vicinity of a cell boundary and that must therefore use a lower encoding rate can reduce the radio resources on uplinks that are used to the same extent as a mobile station at the cell center.

As explained as an object of the invention, downlink throughput tends to decrease as a result of using AMC in accordance with the propagation path conditions at a mobile station in the vicinity of a cell boundary. Thus, to realize this low throughput, the uplink radio resources that are used are reduced and the released portion then used in other uplink data channel transmission, whereby the system throughput of all uplink/downlinks can be improved.

The transmitted waves from a mobile station located in the vicinity of a cell boundary acts as interference waves in adjacent cells, but in the present embodiment, the proportion of transmitting uplink control signals by a mobile station can be reduced, and the effects of enabling a decrease of interference upon adjacent cells and improving the uplink throughput of adjacent cells can therefore be expected. Still further, because the proportion of the use of radio resources is reduced in the vicinity of cell boundaries, the average transmission power of a mobile station is decreased and the average continuous battery time can be improved.

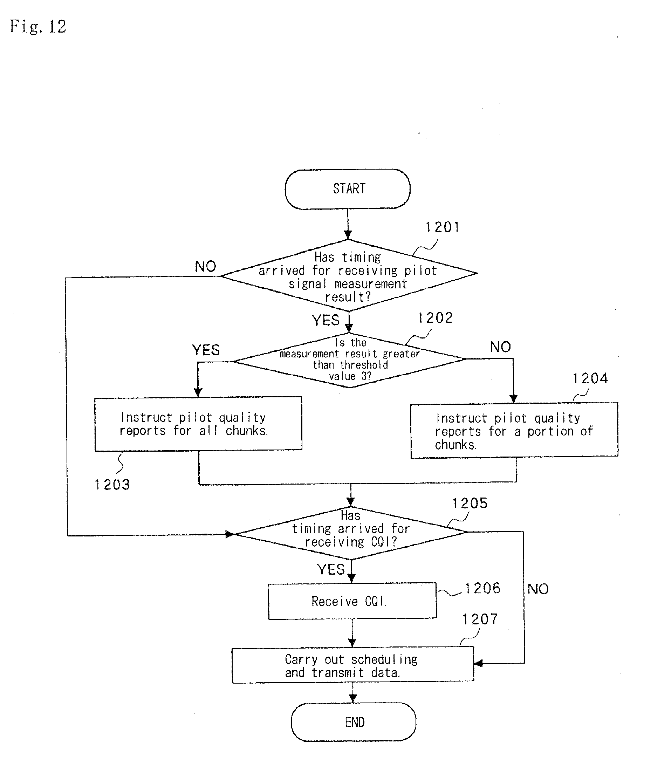

The base station in the present embodiment has fundamentally the same block configuration as the configuration shown in FIG. 4, but the operations relating to scheduling realized by the scheduler, comparator, and control signal generator differ from the example of the first exemplary embodiment. FIG. 12 shows the flow relating to scheduling operations carried out in a TTI period by the base station in the present embodiment.

Referring to FIG. 12, at the reception timing of a pilot signal measurement result ("Yes" in Step 1201), the reception processor in the base station receives the measurement result information of the pilot signal from each mobile station and supplies this information to the comparator. Here, the result of measuring the pilot signal is the average reception power of the pilot signal in all bands.

In the comparator, the results of measuring the pilot signal from each mobile station are compared with a prescribed threshold value 3 (Step 1202). These comparison results are supplied to the control signal generator.

When the received measurement result of the pilot signal surpasses threshold value 3 ("Yes" in Step 1202), control signal generator both instructs the mobile station that transmitted the pilot signal to report the CQI for all chunks through the transmission processor and assigns the required uplink radio resources (Step 1203). When the received pilot signal measurement result is not greater than threshold value 3 ("No" in Step 1202), the control signal generator both instructs the mobile station that transmitted the pilot signal to report only the CQI for the odd-numbered chunks through transmission processor 408 and assigns the necessary uplink radio resources (Step 1204).

After executing Step 1203 or Step 1204, the reception processor receives the CQI from each mobile station at the timing of CQI reception ("Yes" in Step 1205) and supplies the COI to the scheduler (Step 1206). The scheduler then performs scheduling of each mobile station based on the CQI from each mobile station, the control signal generator generates scheduling signals based on this scheduling information and transmits the scheduling signals to each mobile station by way of the transmission processor (Step 1207).

In the above-described scheduling operations, a configuration is possible such that, when the pilot signal measurement result from a mobile station is less than threshold value 3 and the mobile station transmitted CQI for odd-numbered chunks in the preceding TTI, the mobile station transmits CQI for even-numbered chunks in this TTI. In this way, CQI information for the greatest possible number of chunks can be given to the base station. In addition, the determination of switching between even-numbered and odd-numbered chunks may be carried out on either the mobile station side on the base station side.

The threshold value for the pilot signal measurement results is not limited to a single threshold value but can also be set to a plurality of threshold values. For example, the number of chunks for which CQI is reported in one TTl may be set to the order of three or more. More specifically, three levels can be set as the threshold values, including a level (first threshold value) for transmitting CQI for all chunks, a level (second threshold value) for transmitting only CQI for odd-numbered chunks, and a level (third threshold value) for transmitting only CQI for chunks having a chunk number that is a multiple of four.

Although the mobile stations here report the pilot signal measurement results to the base station and the base station determines the alteration of the number of chunks for which CQI is to be reported, the present invention is not limited to this form. For example, the mobile stations may also measure the pilot signal measurement results, compare the results with a prescribed threshold value, and independently alter the number of chunks.

According to the above-described embodiment, the uplink radio resources that are used in a mobile station that uses a low coding rate due to its location in the vicinity of a cell boundary can be reduced to the same level as a mobile station in the center of a cell. As a result, the uplink radio resources that are necessary for realizing less throughput can be reduced, and to this extent, the radio resources can be used in other uplink data channel transmission, whereby the system throughput of all uplinks/downlinks can be increased.

In addition, the transmission of a mobile station located in the vicinity of a cell boundary causes interference waves for adjacent cells, but according to the present embodiment, the proportion of an uplink for transmitting control signals can be reduced, whereby the effects of reducing interference upon adjacent cells and improving uplink throughput in adjacent cells can be expected.

Still further, according to the present embodiment, the proportion of radio resources used in the vicinity of a cell boundary is reduced, whereby the average transmission power of mobile stations can be lowered and the average continuous battery life can be improved.

### Sixth Exemplary Embodiment

The radio communication system that is the sixth exemplary embodiment of the present invention employs the construction (DL data transmission/UL control channel/pilot determination/base station determination/particle-size alteration) of the second embodiment. Although the radio communication system of the present embodiment uses OFDMA in downlinks and FDMA in uplinks as in the fifth exemplary embodiment, the present embodiment differs from the fifth exemplary embodiment in that mobile stations in which the pilot signal measurement results are not greater than a prescribed threshold value calculate and report CQI that indicates the average quality of two adjacent chunks rather than reporting only CQI for a portion of chunks. The operations are otherwise the same as in the fifth exemplary embodiment.

In this embodiment as well, a plurality of threshold values can be set. When a plurality of threshold values are set, increasing the number of averaged chunks to the extent of decrease of the pilot signal measurement results enables a decrease of the number of CQI that mobile stations are to report.

By means of the present embodiment, as in the fifth exemplary embodiment, the uplink radio resources used in a mobile station that uses a low coding due to its location in the vicinity of a cell boundary can be reduced to the same level as for a mobile station in the center of a cell. As a result, the uplink radio resources that are necessary for realizing low throughput can be reduced, and to this extent, the radio resources can be used in other uplink data channel transmission to allow an improvement of the system throughput of all uplinks/downlinks.

The transmission of a mobile station that is located in the vicinity of a cell boundary causes interference waves for adjacent cells, but because the proportion for uplink control signal transmission by such a mobile station can be reduced, the effects of reducing the interference upon adjacent cells and improving the uplink throughput in adjacent cells can be expected.

Still further, because the proportion of use of radio resources in the vicinity of cell boundaries is reduced, the average transmission power of mobile stations decreases and the average continuous battery life can be improved.

### Seventh Exemplary Embodiment

The radio communication system that is the seventh exemplary embodiment of the present invention employs the construction (DL data transmission/UL control channel/CQI determination/base station determination/frequency alteration) of the first embodiment. The radio communication system of the present embodiment uses OFDM in downlinks and FDMA in uplinks as in the fifth exemplary embodiment, but the present embodiment differs from the fifth exemplary embodiment in that, rather than altering the amount of information transmitted by the uplink control signals transmitted by mobile stations, the amount of information of downlink control signals transmitted by the base station is altered. The operations are otherwise the same as in the fifth exemplary embodiment.

Explanation next regards the specifics of the configuration and operation of the base station in the present embodiment. The base station is fundamentally of the same configuration as the base station in the fifth exemplary embodiment (refer to the configuration shown in FIG. 4), but the scheduling operation differs from the example of the fifth exemplary embodiment.

In the base station, the scheduler generates scheduling information for mobile stations that includes information such as the transmission timing of data that are transmitted on a downlink data channel and setting value information necessary for reception, and the control signal generator reports this generated scheduling information to mobile stations through transmission processor 408. Upon receiving the scheduling information, the mobile stations receive data during unit transmission time interval N in accordance with the received scheduling information at a prescribed timing.

In the base station, the reception processor receives CQI, which is propagation path information transmitted by a mobile station, on an uplink. The comparator then compares the received CQI with a prescribed threshold value. When the received CQI is not greater than a prescribed threshold value, the control signal generator determines that the propagation environment of the mobile station is poor, sets the unit transmission time interval N to N1, and reports this set value N 1 to the mobile station. If the received CQI surpasses the prescribed threshold value, the control signal generator determines that the propagation environment of the mobile station is good, sets the unit transmission time interval N to N2 (<N1), and reports this set value N2 to the mobile station.

According to the present embodiment, the unit transmission time interval N is set to setting value N1 (>N2) when the propagation environment of a mobile station is poor, whereby the time interval for receiving a data signal for one scheduling signal is lengthened and the proportion of overhead can be decreased. Accordingly, the power for transmission control signals to a mobile station can be decreased, and to this extent, the radio resources can be used for other channels and the system throughput can be improved.

### Eighth Exemplary Embodiment

The radio communication system that is the eighth exemplary embodiment of the present invention employs the construction (DL data transmission/UL control channel/pilot determination/base station determination/particle-size alteration) of the second embodiment. The radio communication system of the present embodiment uses OFDMA for downlinks and FDMA for uplinks, as in the fifth exemplary embodiment. The radio communication system of the fifth exemplary embodiment reduces the amount of information by decreasing the number of chunks for which CQI is reported in a mobile station for which the propagation environment is poor. In contrast, the radio communication system of the present embodiment differs from the fifth exemplary embodiment in that the amount of information is reduced by increasing the particle size of CQI.

For example, when one from the 32 types of CQI values is reported as the CQI report value, the necessary number of information bits is 5. On the other hand, when one from eight types of CQI values is reported as the CQI report values, the necessary number of bits can be reduced to 3. In the present embodiment, two CQI sets are prepared, the table that is used is altered according to the propagation path conditions, and the number of information bits is altered.

More specifically, a mobile station in the present embodiment includes a first table having 32 types of CQI values and a second table having eight types of CQI values; and the control signal generator causes the mobile station to execute the report of CQI values that use the first table when the propagation path environment of the mobile station is good ("Yes" in Step 1202 of FIG. 12) and causes the mobile station to execute the report of CQI values that use the second table when the propagation path environment of the mobile station is poor ("No" in Step 1202 of FIG. 12). The operations are otherwise the same as the fifth exemplary embodiment.

In this embodiment, as in the fifth exemplary embodiment, a mobile station that uses a low coding rate due to its location in the vicinity of a cell boundary can also reduce the used uplink radio resources to the same level as a mobile station in the cell center. As a result, the uplink radio resources required for realizing low throughput are reduced, and to this extent, the radio resources are used in other uplink data channel transmission, whereby the system throughput of all uplinks/downlinks can be improved.

In addition, the transmission of a mobile station located in the vicinity of a cell boundary causes interference waves for adjacent cells, but according to the present embodiment, the proportion by which a mobile station transmits uplink control signals can be reduced, whereby the effects of reducing the interference upon adjacent cells and improving the uplink throughput in adjacent cells can be expected.

Still further, because the proportion of radio resources that are used in the vicinity of cell boundaries are reduced, the average transmission power of mobile stations can be lowered, and the average continuous battery life can be improved.

## Claims

1. A radio communication method carried out in a communication system in which a base station and a mobile station are connected to allow communication by way of radio links, said radio communication method comprising steps wherein:
said base station uses a control channel set to a downlink of said radio links to transmit a control signal to said mobile station;
said mobile station, based on the control signal received from said base station, uses a data channel set to a downlink or an uplink of said radio links to receive or transmit data; and
an amount of information of said control signal is altered in accordance with communication conditions of the propagation paths of said radio links formed between said base station and mobile station.

2. A radio communication method carried out in a radio communication system in which a base station and a mobile station are connected to allow communication by way of radio links, said radio communication method comprising steps wherein:
said mobile station uses a control channel set to an uplink of said radio links to transmit a control signal to said base station;
said base station, based on the control signal received from said mobile station, uses a data channel set to a downlink or an uplink of said radio links to transmit or receive data; and
an amount of information of said control signal is altered in accordance with communication conditions of propagation paths of said radio links formed between said base station and mobile station.

3. A radio communication method according to claim 1 or claim 2, further comprising a step wherein said base station determines alteration of the amount of information of said control signal.

4. A radio communication method according to claim 1 or claim 2, further comprising a step wherein said mobile station determines the alteration of the amount of information of said control signal.

5. A radio communication method carried out in a communication system wherein a base station and mobile stations are connected to allow communication by way of radio links, said radio communication method comprising steps wherein:
said base station uses control channels set to downlinks of said radio links to transmit a common control signal to a plurality of said mobile stations connected by way of said radio links;
each of said mobile stations, based on the common control signal received from said base station, uses a data channel set to a downlink or an uplink of said radio links to receive or transmit data; and
the number of mobile stations that are the transmission objects of said common control signal is altered in accordance with communication conditions of propagation paths of said radio links formed between said base station and each of said mobile stations.

6. A radio communication method according to claim 3, further comprising a step wherein said base station determines the alteration of the number of mobile stations that are the transmission objects of said common control signal.

7. A radio communication method according to any one of claims 1 to 6, further comprising steps wherein:
said base station transmits a pilot signal at fixed power;
said mobile stations measure the reception quality of the pilot signal from said base station and transmit the results of this measurement to said base station; and
said base station, based on the reception quality of said pilot signal received from said mobile stations, determines the communication conditions of said propagation paths.

8. A radio communication method according to any one of claims 1 to 6, further comprising steps wherein:
said base station transmits a pilot signal at fixed power;
said mobile stations measure the reception quality of the pilot signal received from said base station, and based on the measurement results, determine the communication conditions of said propagation paths.

9. A radio communication method according to any one of claims 1 to 6, further comprising a step wherein said base station both transmits a pilot signal to said mobile stations and carries out control of the transmission power of the pilot signal such that the transmitted pilot signal is received at said mobile stations at a fixed power, and, based on the controlled transmission power, determines the communication conditions of said propagation paths.

10. A radio communication method according to any one of claims 1 to 6, further comprising steps wherein:
said mobile stations transmit pilot signals at a fixed power;
said base station measures the reception quality of pilot signals from said mobile stations and transmit the measurement results to said mobile stations; and
said mobile stations, based on the reception quality of said pilot signals received from said base station, determine the communication conditions of said propagation paths.

11. A radio communication method according to any one of claims 1 to 6, further comprising steps wherein:
said mobile stations transmit pilot signals at a fixed power;
said base station measures the reception quality of pilot signals received from said mobile stations, and based on the measurement results, determines the communication conditions of said propagation paths.

12. A radio communication method according to any one of claims 1 to 6, further comprising a step wherein said mobile stations both transmit pilot signals to said base station and perform control of the transmission power of said pilot signals such that the transmitted pilot signals are received in said base station at a fixed power, and, based on the controlled transmission power, determine the communication conditions of said propagation paths.

13. A radio communication method according to any one of claims 1 to 6, further comprising a step wherein said base station, based on reception error rate of said control signal in said mobile stations, determines communication conditions of said propagation paths.

14. A radio communication method according to any one of claims 1 to 4, wherein the alteration of the amount of information of said control signal is the alteration of the number of information bits of said control signal transmitted in a unit transmission time.

15. A radio communication method according to claim 14, wherein said control signal is a control signal for reporting a value selected from among a set of a plurality of candidate values, and the alteration of the number of bits of said control signal is the alteration of the number of candidate values contained in said set.

16. A radio communication method according to claim 14, wherein said control signal contains a plurality of report values, and the alteration of the number of bits of said control signal is the alteration of the number of said report values.

17. A radio communication method according to any one of claims 1 to 4, wherein said alteration of the amount of information of said control signal is alteration of the transmission frequency of said control signal transmitted within a prescribed time interval.

18. A radio communication method according to any one of claims 1 to 4, further comprising steps of:
comparing a measurement value for determining said propagation path conditions with a prescribed threshold value, and based on the result of this comparison, determining alteration of the amount of information of said control signal; and
controlling said prescribed threshold value in accordance with the amount of traffic of said data channel.

19. A radio communication method according to claim 1, wherein said control signal is a control signal for controlling radio resources of said uplink that said mobile stations are permitted to use.

20. A radio communication method according to claim 1, wherein said control signal is a control signal for reporting to said mobile stations that data are to be transmitted by a data channel set to said downlink.

21. A radio communication method according to claim 2, wherein transmission of said data is data transmission that uses a plurality of frequency bands, and said control signal contains propagation path quality information of said frequency bands.

22. A radio communication method according to claim 2, wherein said control signal is a control signal for reporting the amount of data in buffers for holding data received by said data channel and that are provided in said mobile stations.

23. A radio communication method according to claim 2, wherein said control signal is a control signal for reporting information that indicates the power use conditions of the mobile stations and that is held in buffers provided in said mobile stations.

24. A radio communication system comprising:
a base station; and
mobile stations connected to allow communication with said base station by way of radio links;
wherein:
said base station uses a control channel set to a downlink of said radio links to transmit a control signal to said mobile stations;
said mobile stations, based on the control signal received from said base station, use a data channel set to a downlink or uplink of said radio links to receive or transmit data; and
an amount of information of said control signal can be altered in accordance with communication conditions of propagation paths of said radio links formed between said base station and said mobile stations.

25. A radio communication system comprising:
a base station; and
mobile stations connected to allow communication with said base station by way of radio links;
wherein:
said mobile stations use a control channel set to an uplink of said radio links to transmit a control signal to said base station;
said base station, based on the control signal received from said mobile stations, uses a data channel set to a downlink or uplink of said radio links to transmit or receive data; and
an amount of information of said control signal can be altered in accordance with communication conditions of propagation paths of said radio links formed between said base station and said mobile stations.

26. A radio communication system according to claim 23 or 24, wherein said base station determines alteration of the amount of information of said control signal.

27. A radio communication system according to claim 23 or 24, wherein said mobile stations determine alteration of the amount of information of said control signal.

28. A radio communication system comprising:
a base station; and
mobile stations connected to allow communication with said base station by way of radio links;
wherein:
said base station uses a control channel set to a downlink of said radio links to transmit a common control signal to a plurality of said mobile station connected by way of said radio links;
each of said mobile stations, based on the common control signal received from said base station, uses a data channel set to a downlink or an uplink of said radio links to receive or transmit data; and
the number of mobile stations that are the transmission objects of said common control signal can be altered in accordance with communication conditions of propagation paths of said radio links formed between said base station and each of said mobile stations.

29. A radio communication system according to claim 28, wherein said base station determines alteration of the number of mobile stations that are the transmission objects of said common control signal.

30. A base station connected to allow communication with mobile stations by way of radio links, said base station comprising:
a control signal generator for generating a control signal for causing the reception or transmission of data with said mobile stations using a data channel set to a downlink or an uplink of said radio links; and
a communication processor for using a control channel set to a downlink of said radio links to transmit to said mobile stations a control signal generated by said control signal generator;
wherein said control signal generator alters an amount of information of said control signal in accordance with communication conditions of propagation paths of said radio links formed with said mobile stations.

31. A base station connected to allow communication with mobile stations by way of radio links, said base station comprising:
a communication processor for, based on a control signal transmitted by said mobile stations using a control channel set to an uplink of said radio links, using a data channel set to a downlink or an uplink of said radio links to transmit or receive data; and
a control signal generator for reporting to said mobile stations the alteration of an amount of information of said control signal in accordance with communication conditions of propagation paths of said radio links formed with said mobile stations.

32. A base station connected to allow communication with mobile stations by way of radio links, said base station comprising:
a control signal generator for generating a common control signal for causing a plurality of said mobile stations connected by way of said radio links to use a data channel set to a downlink or an uplink of said radio links to receive or transmit data; and
a communication processor for using a control channel set to a downlink of said radio links to transmit to each of said mobile stations a control signal generated in said control signal generator;
wherein said control signal generator alters the number of mobile station that are transmission objects of said common control signal in accordance with communication conditions of propagation path of said radio links formed with each of said mobile stations.

33. A base station according to any one of claims 30 to 32, wherein:
said communication processor both transmits a pilot signal at a fixed power and receives the results of measurement of reception quality of said pilot signal from said mobile stations; and
said control signal generator, based on reception quality of said pilot signal received from said mobile stations, determines the communication conditions of said propagation paths.

34. A base station according to any one of claims 30 to 32, wherein:
said communication processor both transmits a pilot signal at a fixed power and implements control of the transmission power of said pilot signal such that said pilot signal that has been transmitted is received at said mobile station at a fixed power; and
said control signal generator, based on said controlled transmission power, determines the communication conditions of said propagation paths.

35. A base station according to any one of claims 30 to 32, wherein:
said communication processor measures reception quality of a pilot signal transmitted by said mobile stations at a fixed power; and
said control signal generator, based on the results of measurement of the pilot signal by said communication processor, determines communication conditions of said propagation paths.

36. A base station according to any one of claims 30 to 32, further comprising:
an error detector for detecting reception error rate of said control signal in said mobile stations;
wherein said control signal generator, based on the reception error rate detected by said error detector, determines communication conditions of said propagation paths.

37. A base station according to claim 30 or claim 31, wherein alteration of the amount of information of said control signal is alteration of the number of information bits of said control signal that is transmitted within a unit transmission time.

38. A base station according to claim 37, wherein said control signal is a control signal for reporting a value selected from a set of a plurality of candidate values, and alteration of the number of bits of said control signal is alteration of the number of candidate values contained in said set.

39. A base station according to claim 37, wherein said control signal contains a plurality of report values, and alteration of the number of bits of said control signal is alteration of the number of said report values.

40. A base station according to claim 30 or 31, wherein alteration of the amount of information of said control signal is alteration of transmission frequency of said control signal transmitted within a prescribed time interval.

41. A base station according to claim 30 or 31, further comprising a comparator for comparing a measurement value for determining said propagation path conditions with a prescribed threshold value, and based on the result of this comparison, determining alteration of the amount of information of said control signal;
wherein said control signal generator controls said prescribed threshold value in accordance with the amount of traffic of said data channel.

42. A base station according to claim 30, wherein said control signal is a control signal for controlling radio resources of said uplink that said mobile stations are permitted to use.

43. A base station according to claim 30, wherein said control signal is a control signal for reporting to said mobile stations that data are to be transmitted by a data channel set to said downlink.

44. A base station according to claim 31, wherein transmission of said data is data transmission that uses a plurality of frequency bands, and said control signal includes propagation path quality information of said frequency bands.

45. A base station according to claim 31, wherein said control signal is a control signal for reporting the amount of data in buffers provided in said mobile stations for holding data received by said data channel.

46. A base station according to claim 31, wherein said control signal is a control signal for reporting information that indicates the power use conditions of the mobile station that is held in buffers provided in said mobile stations.

47. A mobile station connected to allow communication to a base station by way of radio links, said mobile station comprising:
a communication processor for transmitting to said base station by means of a control channel set to an uplink of said radio links a control signal for causing said base station to use a data channel set to a downlink or uplink of said radio links to transmit or receive data;
wherein said communication processor alters an amount of information of said control signal in accordance with communication conditions of propagation paths of said radio links formed with said base station.

48. A mobile station connected to allow communication with a base station by way of radio links, said mobile station comprising:
a communication processor for, based on a control signal transmitted by said base station using a control channel set to a downlink of said radio links, using a data channel set to a downlink or uplink of said radio links to receive or transmit data;
wherein said communication processor reports to said base station the alteration of an amount of information of said control signal in accordance with communication conditions of propagation paths of said radio links formed with said base station.

49. A mobile station according to claim 47 or claim 48, further comprising:
a measurement unit for measuring reception quality of a pilot signal transmitted by said base station at a fixed power;
wherein said communication processor, based on reception quality measured in said measurement unit, determines communication conditions of said propagation paths.

50. A mobile station according to claim 47 or claim 48, wherein:
said communication processor both transmits a pilot signal to said base station and implements control of the transmission power of said pilot signal such that the transmitted pilot signal is received in said base station at a fixed power; and
based on the controlled transmission power, determines communication conditions of said propagation paths.

## Amended claims

### Amended claims under Art. 19.1 PCT

**1.** A radio communication method carried out in a communication system in which a base station and a mobile station are connected to allow communication by way of radio links, said radio communication method comprising:
using, by said base station, a control channel set to a downlink of said radio links to transmit a control signal to said mobile station;
based on the control signal received from said base station, using, by said mobile station, a data channel set to a downlink or an uplink of said radio links to receive or transmit data; and
altering an amount of information of said control signal in accordance with communication conditions of the propagation paths of said radio links formed between said base station and mobile station.

**2.** A radio communication method carried out in a radio communication system in which a base station and a mobile station are connected to allow communication by way of radio links, said radio communication method comprising:
using, by said mobile station, a control channel set to an uplink of said radio links to transmit a control signal to said base station;
based on the control signal received from said mobile station, using, by said base station, a data channel set to a downlink or an uplink of said radio links to transmit or receive data; and
altering an amount of information of said control signal in accordance with communication conditions of propagation paths of said radio lin k s formed between said base station and mobile station.

**3.** A radio communication method according to claim 1 or claim 2, further comprising determining, by said base station, alteration of the amount of information of said control signal.

**4.** A radio communication method according to claim 1 or claim 2, further comprising determining, by said mobile station, the alteration of the amount of information of said control signal.

**5.** A radio communication method carried out in a communication system wherein a base station and mobile stations are connected to allow communication by way of radio links, said radio communication method comprising:
using, by said base station, control channels set to downlinks of said radio links to transmit a common control signal to a plurality of said mobile stations connected by way of said radio links;
based on the common control signal received from said base station, using, by each of said mobile stations, a data channel set to a downlink or an uplink of said radio links to receive or transmit data; and
altering the number of mobile stations that are the transmission objects of said common control signal in accordance with communication conditions of propagation paths of said radio links formed between said base station and each of said mobile stations.

**6.** A radio communication method according to claim 5, further comprising determining, by said base station, the alteration of the number of mobile stations that are the transmission objects of said common control signal.

**7.** A radio communication method according to any one of claims 1 to 6, further comprising :
transmitting, by said base station, a pilot signal at fixed power;
measuring, by said mobile stations, the reception quality of the pilot signal from said base station and transmitting the results of this measurement to said base station; and
based on the reception quality of said pilot signal received from said mobile stations, determining, by said base station, the communication conditions of said propagation paths.

**8.** A radio communication method according to any one of claims 1 to 6, further comprising :
transmitting, by said base station, a pilot signal at fixed power;
measuring, by said mobile stations, the reception quality of the pilot signal received from said base station; and
based on the measurement results, determining, by said mobile stations, the communication conditions of said propagation paths.

**9.** A radio communication method according to any one of claims 1 to 6, further comprising:
transmitting, by said base station, a pilot signal to said mobile stations; carrying out, by said base station, control of the transmission power of the pilot signal such that the transmitted pilot signal is received at said mobile stations at a fixed power; and
based on the controlled transmission power, determining, by said base station, the communication conditions of said propagation paths.

**10.** A radio communication method according to any one of claims 1 to 6, further comprising:
transmitting, by said mobile stations, pilot signals at a fixed power;
measuring, by said base station, the reception quality of pilot signals from said mobile stations;
transmitting, by said base station, the measurement results to said mobile stations; and
based on the reception quality of said pilot signals received from said base station, determining, by said mobile stations, the communication conditions of said propagation paths.

**11.** A radio communication method according to any one of claims 1 to 6, further comprising:
transmitting, by said mobile stations, pilot signals at a fixed power;
measuring, by said base station, the reception quality of pilot signals received from said mobile stations; and
based on the measurement results, determining, by said base station, the communication conditions of said propagation paths.

**12.** A radio communication method according to any one of claims 1 to 6, further comprising:
transmitting, by said mobile stations, pilot signals to said base station;
performing, by said mobile stations, control of the transmission power of said pilot signals such that the transmitted pilot signals are received in said base station at a fixed power; and
based on the controlled transmission power, determining, by said mobile stations, the communication conditions of said propagation paths.

**13.** A radio communication method according to any one of claims 1 to 6, further comprising, based on reception error rate of said control signal in said mobile stations, determining, by said base station, communication conditions of said propagation paths.

**14.** A radio communication method according to any one of claims 1 to 4, wherein the alteration of the amount of information of said control signal is the alteration of the number of information bits of said control signal transmitted in a unit transmission time.

**15.** A radio communication method according to claim 14, wherein said control signal is a control signal for reporting a value selected from among a set of a plurality of candidate values, and the alteration of the number of bits of said control signal is the alteration of the number of candidate values contained in said set.

**16.** A radio communication method according to claim 14, wherein said control signal contains a plurality of report values, and the alteration of the number of bits of said control signal is the alteration of the number of said report values.

**17.** A radio communication method according to any one of claims 1 to 4, wherein said alteration of the amount of information of said control signal is alteration of the transmission frequency of said control signal transmitted within a prescribed time interval.

**18.** A radio communication method according to any one of claims 1 to 4, further comprising:
comparing a measurement value for determining said propagation path conditions with a prescribed threshold value, and based on the result of this comparison;
determining alteration of the amount of information of said control signal; and
controlling said prescribed threshold value in accordance with the amount of traffic of said data channel.

**19.** A radio communication method according to claim 1, wherein said control signal is a control signal for controlling radio resources of said uplink that said mobile stations are permitted to use.

**20.** A radio communication method according to claim 1, wherein said control signal is a control signal for reporting to said mobile stations that data are to be transmitted by a data channel set to said downlink.

**21.** A radio communication method according to claim 2, wherein transmission of said data is data transmission that uses a plurality of frequency bands, and said control signal contains propagation path quality information of said frequency bands.

**22.** A radio communication method according to claim 2, wherein said control signal is a control signal for reporting the amount of data in buffers for holding data received by said data channel and that are provided in said mobile stations.

**23.** A radio communication method according to claim 2, wherein said control signal is a control signal for reporting information that indicates the power use conditions of the mobile stations and that is held in buffers provided in said mobile stations.

**24.** A radio communication system comprising:
a base station; and
mobile stations connected to allow communication with said base station by way of radio links;
wherein:
said base station uses a control channel set to a downlink of said radio links to transmit a control signal to said mobile stations;
said mobile stations, based on the control signal received from said base station, use a data channel set to a downlink or uplink of said radio links to receive or transmit data; and
an amount of information of said control signal can be altered in accordance with communication conditions of propagation paths of said radio links formed between said base station and said mobile stations.

**25.** A radio communication system comprising:
a base station; and
mobile stations connected to allow communication with said base station by way of radio links;
wherein:
said mobile stations use a control channel set to an uplink of said radio links to transmit a control signal to said base station;
said base station, based on the control signal received from said mobile stations, uses a data channel set to a downlink or uplink of said radio links to transmit or receive data; and
an amount of information of said control signal can be altered in accordance with communication conditions of propagation paths of said radio links formed between said base station and said mobile stations.

**26.** A radio communication system according to claim 24 or 25, wherein said base station determines alteration of the amount of information of said control signal.

**27.** A radio communication system according to claim 24 or 25, wherein said mobile stations determine alteration of the amount of information of said control signal.

**28.** A radio communication system comprising:
a base station; and
mobile stations connected to allow communication with said base station by way of radio links;
wherein:
said base station uses a control channel set to a downlink of said radio links to transmit a common control signal to a plurality of said mobile station connected by way of said radio links;
each of said mobile stations, based on the common control signal received from said base station, uses a data channel set to a downlink or an uplink of said radio links to receive or transmit data; and
the number of mobile stations that are the transmission objects of said common control signal can be altered in accordance with communication conditions of propagation paths of said radio links formed between said base station and each of said mobile stations.

**29.** A radio communication system according to claim 28, wherein said base station determines alteration of the number of mobile stations that are the transmission objects of said common control signal.

**30.** A base station connected to allow communication with mobile stations by way of radio links, said base station comprising:
a control signal generator for generating a control signal for causing the reception or transmission of data with said mobile stations using a data channel set to a downlink or an uplink of said radio links; and
a communication processor for using a control channel set to a downlink of said radio links to transmit to said mobile stations a control signal generated by said control signal generator;
wherein said control signal generator alters an amount of information of said control signal in accordance with communication conditions of propagation paths of said radio links formed with said mobile stations.

**31.** A base station connected to allow communication with mobile stations by way of radio links, said base station comprising:
a communication processor for, based on a control signal transmitted by said mobile stations using a control channel set to an uplink of said radio links, using a data channel set to a downlink or an uplink of said radio links to transmit or receive data; and
a control signal generator for reporting to said mobile stations the alteration of an amount of information of said control signal in accordance with communication conditions of propagation paths of said radio links formed with said mobile stations.

**32.** A base station connected to allow communication with mobile stations by way of radio links, said base station comprising:
a control signal generator for generating a common control signal for causing a plurality of said mobile stations connected by way of said radio links to use a data channel set to a downlink or an uplink of said radio links to receive or transmit data; and
a communication processor for using a control channel set to a downlink of said radio links to transmit to each of said mobile stations a control signal generated in said control signal generator;
wherein said control signal generator alters the number of mobile station that are transmission objects of said common control signal in accordance with communication conditions of propagation path of said radio links formed with each of said mobile stations.

**33.** A base station according to any one of claims 30 to 32, wherein:
said communication processor both transmits a pilot signal at a fixed power and receives the results of measurement of reception quality of said pilot signal from said mobile stations; and
said control signal generator, based on reception quality of said pilot signal received from said mobile stations, determines the communication conditions of said propagation paths.

**34.** A base station according to any one of claims 30 to 32, wherein:
said communication processor both transmits a pilot signal at a fixed power and implements control of the transmission power of said pilot signal such that said pilot signal that has been transmitted is received at said mobile station at a fixed power; and
said control signal generator, based on said controlled transmission power, determines the communication conditions of said propagation paths.

**35.** A base station according to any one of claims 30 to 32, wherein:
said communication processor measures reception quality of a pilot signal transmitted by said mobile stations at a fixed power; and
said control signal generator, based on the results of measurement of the pilot signal by said communication processor, determines communication conditions of said propagation paths.

**36.** A base station according to any one of claims 30 to 32, further comprising:
an error detector for detecting reception error rate of said control signal in said mobile stations;
wherein said control signal generator, based on the reception error rate detected by said error detector, determines communication conditions of said propagation paths.

**37.** A base station according to claim 30 or claim 31, wherein alteration of the amount of information of said control signal is alteration of the number of information bits of said control signal that is transmitted within a unit transmission time.

**38.** A base station according to claim 37, wherein said control signal is a control signal for reporting a value selected from a set of a plurality of candidate values, and alteration of the number of bits of said control signal is alteration of the number of candidate values contained in said set.

**39.** A base station according to claim 37, wherein said control signal contains a plurality of report values, and alteration of the number of bits of said control signal is alteration of the number of said report values.

**40.** A base station according to claim 30 or 31, wherein alteration of the amount of information of said control signal is alteration of transmission frequency of said control signal transmitted within a prescribed time interval.

**41.** A base station according to claim 30 or 31, further comprising a comparator for comparing a measurement value for determining said propagation path conditions with a prescribed threshold value, and based on the result of this comparison, determining alteration of the amount of information of said control signal;
wherein said control signal generator controls said prescribed threshold value in accordance with the amount of traffic of said data channel.

**42.** A base station according to claim 30, wherein said control signal is a control signal for controlling radio resources of said uplink that said mobile stations are permitted to use.

**43.** A base station according to claim 30, wherein said control signal is a control signal for reporting to said mobile stations that data are to be transmitted by a data channel set to said downlink.

**44.** A base station according to claim 31, wherein transmission of said data is data transmission that uses a plurality of frequency bands, and said control signal includes propagation path quality information of said frequency bands.

**45.** A base station according to claim 31, wherein said control signal is a control signal for reporting the amount of data in buffers provided in said mobile stations for holding data received by said data channel.

**46.** A base station according to claim 31, wherein said control signal is a control signal for reporting information that indicates the power use conditions of the mobile station that is held in buffers provided in said mobile stations.

**47.** A mobile station connected to allow communication to a base station by way of radio links, said mobile station comprising:
a communication processor for transmitting to said base station by means of a control channel set to an uplink of said radio links a control signal for causing said base station to use a data channel set to a downlink or uplink of said radio links to transmit or receive data;
wherein said communication processor alters an amount of information of said control signal in accordance with communication conditions of propagation paths of said radio links formed with said base station.

**48.** A mobile station connected to allow communication with a base station by way of radio links, said mobile station comprising:
a communication processor for, based on a control signal transmitted by said base station using a control channel set to a downlink of said radio links, using a data channel set to a downlink or uplink of said radio links to receive or transmit data;
wherein said communication processor reports to said base station the alteration of an amount of information of said control signal in accordance with communication conditions of propagation paths of said radio links formed with said base station.

**49.** A mobile station according to claim 47 or claim 48, further comprising:
a measurement unit for measuring reception quality of a pilot signal transmitted by said base station at a fixed power;
wherein said communication processor, based on reception quality measured in said measurement unit, determines communication conditions of said propagation paths.

**50.** A mobile station according to claim 47 or claim 48, wherein:
said communication processor both transmits a pilot signal to said base station and implements control of the transmission power of said pilot signal such that the transmitted pilot signal is received in said base station at a fixed power; and based on the controlled transmission power, determines communication conditions of said propagation paths.
